# EUROPEAN PATENT APPLICATION

(11) **EP 4 741 051 A2**
(43) Date of publication of application: **13.05.2026**
(21) Application number: 25226966.7
(22) Date of filing: 31.03.2020
(51) Int. Cl.: B01J 20/30

(54) **POLYMER COMPOSITIONS CONTAINING ZEOLITE FOR ENHANCED WATER ADSORPTION**

(30) Priority: 01.04.2019 US 201962827332 P; 14.01.2020 US 202062961024 P; 14.01.2020 US 202062961038 P
(62) Divisional of application: 20722037.7
(71) Applicant: CSP Technologies, Inc., Auburn, AL 36832 (US); Le Centre National de la Recherche Scientifique, 75794 Paris (FR); L'Université de Haute Alsace, 68093 Mulhouse (FR)
(72) Inventor: TAHRAOUI, Zakaria, 67110 Niederbronn-les-Bains (FR); FORLER, Patrice, 67110 Niederbronn-les-Bains (FR); DAOU, Jean, 68093 Mulhouse (FR); MARICHAL, Claire, 68093 Mulhouse (FR); NOUALI, Habiba, 68093 Mulhouse (FR)
(74) Representative: Maiwald GmbH

(57) **Abstract**

This invention relates generally to zeolites and polymer compositions with zeolites having enhanced adsorption capacity for adsorption of water, ammonia and other similar compounds. The invention is directed particularly to aluminosilicate zeolites, and methods for preparing zeolite entrained polymer compositions having enhanced water adsorption properties. This invention relates also to improved packaging materials with enhanced water adsorption properties incorporating the polymer compositions containing zeolites.

## Description

### CROSS-REFERENCE TO RELATED APPLICATIONS

This application claims priority under 35 U.S.C. § 119(e) from U.S. Provisional Patent Application No. 62/961,024, entitled "ZEOLITE WITH ENHANCED WATER ADSORPTION", filed January 14, 2020; from U.S. Provisional Patent Application No. 62/961,038, entitled "COMPOSITES CONTAINING ZEOLITE FOR ENHANCED WATER ADSORPTION", filed January 14, 2020; and U.S. Provisional Patent Application 62/827,332, entitled "ZEOLITE WITH ENHANCED WATER ADSORPTION", filed on April 1, 2019; of which the contents of all three applications are incorporated herein by reference in their entirety.

### FIELD OF THE INVENTION

This invention relates generally to zeolites and polymer compositions with zeolites having enhanced adsorption capacity for adsorption of water, ammonia, nitrogen and oxygen. The invention is directed particularly to aluminosilicate zeolites, and methods for preparing zeolite entrained polymer compositions having enhanced water adsorption properties. This invention relates also to improved packaging materials with enhanced water adsorption properties incorporating the polymer compositions containing zeolites.

### BACKGROUND OF THE INVENTION

The adsorption of water by materials is important for many applications which necessitate capture and release of water such as dehumidifiers, adsorption heat pumps, various specialized packaging and others. One of the most promising adsorption heat pump technologies in this context is based on the evaporation and consecutive adsorption of water, under specific conditions. Water content in natural gas is an important concern in adsorption heat pumps because it can cause corrosion and hydrate formation ending in pipeline blockage.

Highly humid environments encourage house dust mites and provide favorable environments for the growth of fungi and various harmful bacteria. Atmospheric relative humidity is an important factor affecting health. Dehumidifying materials continue to be needed for home and commercial environments to control moisture conditions and reduce the levels of harmful microorganisms.

The need for moisture removal technology and moisture controlled packaging is also important for improving the quality and safe storage of processed foods, drugs and cosmetics. The shipping and storage of moisture sensitive materials such as electronic components and ammunition also require moisture controlled packaging.

Environmental decontamination and clean-up efforts also require the use of adsorbent technologies and a need for such clean technologies continues to grow as the number and complexity of industrial processes worldwide increases. Therefore, a demand continues to exist for controlling humidity and development of high efficiency sorbent technology including new and effective adsorbent materials is needed.

Several strategies have been used to remove water vapor from gas streams involving the use of a solid or liquid desiccants, membranes, refrigeration, and supersonic methods. One of the most effective strategies remains the use of a solid porous beds incorporating a porous desiccant having effective properties for removing water vapor from a gaseous mixture. A variety of porous materials such as zeolites, metal organic frameworks, clays, carbon based adsorbents, and organic polymers have been explored for various applications. Polymeric membranes for gas separation such as natural gas sweetening, landfill gas recovery, hydrogen recovery and purification, flue gas and air separation is one of the most important applications which uses inorganic porous and nonporous materials dispersed into a polymer matrix. Fillers such as metal organic frameworks (MOFs), activated carbon (AC), mesoporous silica (MS), as well as zeolites have been incorporated into polymers in order to confer certain adsorption, permeability and selectivity to composite materials.

Zeolites are compounds that act as molecular sieves and are widely used for their high adsorption properties and their thermal, chemical and mechanical stabilities. Zeolites are known for their hygroscopic properties. They are used for drying solutions, for dehumidifying closed spaces, as well as for drying textiles after the washing process, and as drying components for dishes in dishwashers. US Patent No. 8,904,667 teaches drying solutions based on zeolitic materials with thermal management comprising a titano-alumino-phosphate as adsorbent for energy-improved drying of objects such as textiles, and its production. The first prototypes of adsorption heat or cooling pumps used adsorbent beds made of zeolite loose grains. Zeolite based materials are also used in powder form for the removal of polluting cations present in waste water. The selectivity of zeolites is also particularly used for odors removal due to its ability to adsorb volatile organic compounds at trace levels in the atmosphere. Zeolite based composites for water removal thus present a great area of interest.

Zeolites are crystalline aluminosilicates with a 3- dimensional, open anion framework consisting of oxygen-sharing SiO4 and AlO4- tetrahedral structure. Although essentially all zeolites are aluminosilicates, some contain more alumina, while others contain more silica. Alumina-rich zeolites are attracted to polar molecules such as water, while silica-rich zeolites work better with nonpolar molecules. Each silicon ion has its +4 charge balanced by four tetrahedral oxygens, and the silica tetrahedra are therefore electrically neutral. Each alumina tetrahedron has a residual charge of -1 since the trivalent aluminum is bonded to four oxygen anions. Therefore, each alumina tetrahedron requires a +1 charge from an extra framework cation in its microporosity to maintain electrical neutrality.

Sodium cations are typically present within the zeolite structure in its natural or in its synthesized form. Sodium ions can be exchanged by mono, divalent or trivalent cations. Several studies have discussed the major role that cations such as Na+, K+, Li+, Mg2+, Ca2+, Zn2+, Mn2+ and Fe3+ play in increasing the affinity between the adsorbates and the adsorbents or in modifying the separation properties of the zeolites. In addition, it is known that aluminosilicate zeolites containing compensating cations in their framework show a high hydrophilic character, especially those with a low Si/Al ratio, which gives them a strong affinity towards water.

The most common zeolites used for water adsorption in the industry are 3A (potassium or KA) and 4A (sodium or NaA) zeolites, which are LTA-type zeolites and 13X (sodium or NaX) zeolite, which are FAU-type zeolites. LTA (Linde Type A) is also known as Zeolite A. The principal building units of zeolite A are sodalite cages which are connected by four-membered rings forming a three-dimensional (3D) network. The aluminosilicate framework of zeolite A (LTA-type) can be further described in terms of two types of polyhedral: one being a simple cubic arrangement of eight polyhedra (the double 4-rings); the other being a truncated octahedron of 24 tetrahedra also named β- cage. In LTA zeolites, sodalite cages are joined via double 4-rings, creating an α- cage in the center of the unit cell. Alternatively, the framework can be described as a primitive cubic arrangement of α- cages joined through single 8-rings. Zeolite A has a three-dimensional pore system and molecules can diffuse in all three directions. Normally, zeolite A is present or synthesized in the sodium form which has a pore opening of about 0.4 nm.

FAU-type (Faujasite) zeolites are the other common form of zeolites used for water adsorption. The faujasite framework consists of supercages or sodalite cages which are connected through hexagonal prisms. The pore, which is formed by a 12-membered ring, has a relatively large diameter of 7.4 Å. The inner cavity has a diameter of 12 Å and is surrounded by 10 sodalite cages. The unit cell is cubic. FAU-type zeolites are one of the main components of cracking catalysts at industrial scale due to their structure and are used in converting high-boiling fractions of petroleum crude to more valuable gasoline, diesel and other products.

It is reported that water adsorption in zeolites is mainly directed by interactions between water, charge compensating cations and the zeolite's framework. Depending on the charge (mono or divalent cations) and the kinetic diameter of the compensating cation, the available microporous volume and the accessibility to the micropores are modified which lead to different adsorption behaviors and adsorption capacities. Although, LTA and FAU-type zeolites show attractive adsorption uptake and high water affinity, their global performances regarding water adsorption are still not optimal mostly due to the nature, size and affinity to water molecules of the compensating cations.

Furthermore, although zeolites are excellent candidates for water adsorption as a result of their shape and pore distribution, processing of zeolites into composite materials such as polymers has proven to present challenges in the industry. The use of zeolites in powder form in polymer manufacturing is problematic. There exists considerable need for improving zeolite adsorbents for application in adsorbent polymer materials which can be incorporated into existing polymer manufacturing processes such as extrusion. A challenge remains to find materials of high performance combining high water uptake, precise operational pressure range control, stability, recyclability and affordability.

Examples of moisture adsorbing desiccant entrained polymers are disclosed in US Patents Nos. 6,174,952 and 6,316,520 which teach processes and resulting structures for producing a modified polymer having interconnecting channels. The interconnecting channels act as controlled transmission passages through the polymer. A hydrophilic agent is blended into the polymer so that it is distributed within the polymer. In one embodiment, a water-adsorbing material, such as zeolite, is blended into the polymer so that the water-adsorbing material is distributed within the product. The polymer product is solidified so that the hydrophilic agent forms passages in the product through which a desired composition is communicable to the water-adsorbing material that is entrained within the product. The solidified product may be used to form a desired shaped article such as plug type inserts and liners for closed containers, or it may be formed into a film, sheet, bead or pellet.

Hodgkin and Solomon discuss how the chemical reactivity of fillers and pigments used in commercial polymer formulations often causes detrimental polymer-filler interactions unless compensating additives are applied during compounding. A method of reducing these interactions by forming stable, inert magnesium-silicate gel-coatings on the surface of mineral fillers is described. Various methods of measuring this reduction in chemical activity are discussed. (Magnesium-Silicate Coated Minerals as Polymer Fillers and Pigments, Journal of Macromolecular Science: Part A - Chemistry, J. H. Hodgkin & D. H. Solomon, Vol. 8, Issue 3, 1974)

The invention herein involves the method of preparing a zeolite material with improved water adsorption characteristics. The invention is directed to composite materials incorporating zeolite as filler which not only preserve zeolite performance within the polymer composition but improves its water adsorption capacity. The polymer materials of the invention have the advantages of having high surface area for water adsorption, high adsorption capacity, measurable mechanical strength, relative cost-effectiveness, as well as being non-corrosive, non-toxic and chemically-inert. A further and important advantage of the process of the invention is its operability within existing polymer manufacturing processes.

### SUMMARY OF THE INVENTION

Disclosed herein are polymer compositions comprising LTA-type and FAU-type aluminosilicate zeolite in powder form exchanged with lithium and magnesium cations that function to enhance water adsorbing or adsorption properties of the polymer composition. Specifically, disclosed herein is a process for making a polymer composition for enhanced sorption, the process comprising the steps of: (a) providing a crude aluminosilicate zeolite; (b) treating the crude zeolite with a solution comprising mono, di or trivalent cations to form a treated cation exchanged zeolite; (c) optionally, repeating step (b) one or more times; (d) drying the treated cation exchanged zeolite to provide a dried cation exchanged zeolite, wherein the dried cation exchanged zeolite has a water adsorption capacity that is greater than the water adsorption capacity of the crude zeolite before cation exchange treatment; (e) optionally, repeating step (b) and step (c) one or more times; (f) adding and blending the dried cation exchanged zeolite with a base polymer; and (g) forming a polymer composition having a water adsorption capacity per gram of zeolite that is greater than the crude zeolite. Also disclosed are polymer compositions prepared by said method and packaging materials comprising said polymer composition.

Further disclosed are polymer composition for enhanced sorption, the polymer composition comprising: (a) a mono, di or trivalent cation exchanged aluminosilicate zeolite and (b) a base polymer; wherein the polymer composition has a water adsorption capacity per gram of zeolite that is greater than a reference crude sodium zeolite.

### BRIEF DESCRIPTION OF THE DRAWINGS

The following detailed description of the presently disclosed technology will be better understood when read in conjunction with the appended drawings. For the purpose of illustrating the presently disclosed technology, there are shown in the drawings various illustrative embodiments. It should be understood, however, that the presently disclosed technology is not limited to the precise arrangements and instrumentalities shown. The invention will be described in conjunction with the following drawings in which like reference numerals designate like elements and wherein:
FIG. 1 is a perspective view of a plug formed of an entrained polymer according to an optional aspect of the present invention;
FIG. 2 is a cross section taken along line 2-2 of FIG. 1;
FIG. 3 is a cross section similar to that of FIG. 2, showing a plug formed of another embodiment of an entrained polymer according to an optional aspect of the present invention;
FIG. 4 is a schematic illustration of an entrained polymer according to an optional aspect of the present invention, in which the active agent is an absorbing or adsorbing material.
FIG. 5 is a a cross sectional view of a sheet or film formed of an entrained polymer according to an optional embodiment of the disclosed concept, adhered to a barrier sheet substrate..
FIG. 6A is a graph illustrating the water adsorption kinetics of LTA-type zeolite (NaA-0), (LiA-1) and (MgA-1) samples in powder form.
FIG. 6B is a graph illustrating the water adsorption kinetics NaA-0-cg, LiA-1-cg and MgA-1-cg samples in powder form.
FIG. 6C is a graph illustrating the water adsorption kinetics of NaA-0-cmp, LiA-1-cmp and MgA-1-cmp samples in powder form.
Figure 7A is a graph illustrating the water adsorption kinetics of the entrained polymer compositions of the invention wherein the crude zeolite was treated and exchanged showing NaA-0, NaA-0-cg and NaA-0-cmp samples.
Figure 7B is a graph illustrating the water adsorption kinetics of the entrained polymer compositions of the invention wherein the crude zeolite was treated and exchanged showing LiA-1, LiA-1-cg and LiA-1-cmp samples.
Figure 7C is a graph illustrating the water adsorption kinetics of the entrained polymer compositions of the invention wherein the crude zeolite was treated and exchanged showing MgA-1, MgA-1-cg and MgA-1-cmp samples.

### DETAILED DESCRIPTION OF THE INVENTION

Water adsorption into hydrophilic zeolite such as LTA-type and FAU-type depends mainly on the available porous volume, interactions with oxygen atoms of the framework and interactions with the compensating cations (solvating layer). Since hydrophilic zeolite frameworks and water molecules are polarized, electrostatic attractions can occur. The invention herein provides the replacement by cation exchange of sodium cations by a smaller monovalent cation such as lithium or a smaller bivalent cation such as magnesium and their incorporation into polymer materials leading to the increase of the available microporous volume and increased water adsorption of the polymer compositions entrained with the exchanged zeolites (+15% and + 22% of available microporous volume for FAU-type zeolite exchanged with magnesium and lithium, respectively, compared to the crude samples). More available microporous volume and less congested pore openings increase the accessibility of water (or other substances) (N2 in LTA) to the micropores within the zeolite particles and improve the storage of the water, (or other substances). In addition, by method of the invention, bivalent cations lead to higher degree of ordered water molecules around them, whereby the improved spatial organization further contributes to an increase in water adsorption capacity. According to methods of the invention, the most significant increase of water adsorption was observed for sodium zeolite samples that underwent cation exchange with magnesium, effectuating an increase of more than 30% of the adsorbed volume of the composite material, for both LTA-type and FAU-type zeolites in comparison to polymer materials containing crude sodium zeolites without cationic exchange. The preferred zeolites used in the invention herein are aluminosilicate zeolites that include sodium, magnesium, lithium, potassium, calcium, zinc, iron and manganese cations.

As referred to herein, the zeolite compounds according to the invention include the aluminosilicates as well as silicoaluminophosphate zeolites containing compensating cations. In varying embodiments, solutions containing cations of sodium, magnesium, lithium, potassium, calcium, zinc, manganese and iron are used in the pretreatment and preparation process of cation exchange of the invention in order to impart enhanced water adsorption properties to the prepared zeolite before its incorporation into the base polymers. Optional embodiments include LTA-type or FAU-type zeolites used in the entrained polymer compositions of the invention herein. In preferred embodiments, the crude zeolite is sodium zeolite and is treated with a solution comprising Mg2+, Li+, K+, Ca+, Zn2+, Mn2+ and Fe3+ cations or a combination thereof.

In addition to its water sorption properties, in alternate embodiments, the polymer compositions of the invention also function to absorb or adsorb ammonia (NH3), nitrogen (N2) and oxygen (O2).

In general, the term "adsorption" refers to the adhesion of atoms, ions or molecules from a gas, liquid or dissolved solid to a surface. The adsorption process creates a film of the adsorbate on the surface of the adsorbent. Adsorption is a surface phenomenon. The term "absorption" refers to the physical or chemical phenomenon or process in which atoms, molecules or ions enter a liquid or solid material. Absorption is a condition in which the absorbate is dissolved by or permeates a liquid or solid (the absorbent), respectively. Absorption involves the volume of the material. In the process of absorption, the molecules undergoing absorption are taken up by the volume, not by the surface; whereas in adsorption, the molecules undergoing adsorption are taken up by the surface. The term "sorption" encompasses both processes of absorption and adsorption, as well as the process of ion exchange. According to the invention, the terms "absorption", "adsorption" and "sorption" are used interchangeably herein. Each time one of these term is used throughout the specification and claims, such term is intended to include and cover all three processes of absorption, adsorption, and ion exchange.

As used herein, the term "base polymer" is a polymer optionally having a gas transmission rate of a selected material that is substantially lower than, lower than or substantially equivalent to, that of the channeling agent. By way of example, such a transmission rate is a water vapor transmission rate in embodiments where the selected material is moisture and the active agent is an antimicrobial gas releasing agent that is activated by moisture. This active agent may include an active component and other components in a formulation configured to release the antimicrobial gas. The primary function of the base polymer is to provide structure for the entrained polymer and zeolite.

In certain embodiments, the channeling agent has a water vapor transmission rate of at least two times that of the base polymer. In other embodiments, the channeling agent has a water vapor transmission rate of at least five times that of the base polymer. In other embodiments, the channeling agent has a water vapor transmission rate of at least ten times that of the base polymer. In still other embodiments, the channeling agent has a water vapor transmission rate of at least twenty times that of the base polymer. In still another embodiment, the channeling agent has a water vapor transmission rate of at least fifty times that of the base polymer. In still other embodiments, the channeling agent has a water vapor transmission rate of at least one hundred times that of the base polymer.

As used herein, the term "channeling agent" or "channeling agents" is defined as a material that is immiscible with the base polymer and has an affinity to transport a gas phase substance at a faster rate than the base polymer. Optionally, a channeling agent is capable of forming channels through the entrained polymer when formed by mixing the channeling agent with the base polymer. Optionally, such channels are capable of transmitting a selected material, such as water, through the entrained polymer at a faster rate than in solely the base polymer.

As used herein, the term "channels" or "interconnecting channels" is defined as passages formed of the channeling agent that penetrate through the base polymer and may be interconnected with each other.

As used herein, the terms "container" or "package," and "packaging" may be used interchangeably herein to indicate a structural object that holds or contains a good or a product. Optionally, a package may include a container with a product stored therein. Non-limiting examples of a container, package and packaging include a box, a tray, a carton, a bottle, a vessel, a pouch and a bag. The package or container may be closed, covered and/or sealed using a variety of mechanisms including, for example, a cover, a lid, a lidding sealant, an adhesive and/or a heat seal. The package or container may be composed or constructed of various materials, such as plastics, metals, resins, glass, wood, combinations thereof and any other materials.

As used herein, the term "entrained polymer" is defined as a monolithic material formed of at least a base polymer with an active agent and optionally also a channeling agent entrained or distributed throughout. An entrained polymer thus includes two-phase polymers (without a channeling agent) and three-phase polymers (with a channeling agent).

As used herein, the term "monolithic," "monolithic structure" or "monolithic composition" is defined as a composition or material that does not consist of two or more discrete macroscopic layers or portions. Accordingly, a "monolithic composition" does not include a multi-layer composite.

As used herein, the term "phase" is defined as a portion or component of a monolithic structure or composition that is uniformly distributed throughout, to give the structure or composition its monolithic characteristics.

As used herein, the term "selected material" is defined as a material that is acted upon, by, or interacts or reacts with an active agent and is capable of being transmitted through the channels of an entrained polymer. For example, in embodiments in which a releasing material is the active agent, the selected material may be moisture that reacts with or otherwise triggers the active agent.

As used herein, the term "three phase" is defined as a monolithic composition or structure comprising three or more phases. An example of a three phase composition according to the invention is an entrained polymer formed of a base polymer, active agent, and channeling agent. Optionally, a three phase composition or structure may include an additional phase, e.g., a colorant, but is nonetheless still considered "three phase" on account of the presence of the three primary functional components.

The zeolite entrained polymer compositions of the invention function to remove, reduce, scavenge, control or modify the amount of water in an environment. In optional embodiments, the polymer composition herein is preferably placed into a closed environment, such as a sealed chamber, container or package in order to cause the sorption of moisture within the space of the sealed environment.

Conventionally, desiccants, sorption agents, oxygen absorbers and other active agents have been used in their raw form, e.g., as loose particulates housed in sachets or canisters within packaging, to control the internal environment of the package. For many applications, it is not desired to have such loosely stored active substances. Thus, the present application provides active entrained polymers comprising zeolite as the active agent, wherein such polymers can be extruded, molded or heat melted into a variety of desired forms, e.g., containers, container liners, plugs, film sheets, pellets, covers, sealing rings and other such structures in order to aid in water adsorption and thereby to extend the shelf life of many products.

The polymer compositions of the invention may be prepared by any known and common manufacturing processes such as extrusion, injection molding, blow molding, thermoforming, vacuum molding, continuous compounding and hot melt dispensing, in which processes the zeolite is added to the base polymer during the manufacturing process and the materials are combined and generally admixed or blended with one another to some degree. The produced combination of the base polymer mixed with the zeolite becomes an entrained polymer composition. According to the invention, the zeolite does not need to be distributed uniformly throughout the base polymer in order to imbue moisture scavenging properties to the entrained polymer composition. In an optional embodiment, the zeolite may be uniformly or essentially uniformly distributed within the base polymer such that the entrained polymer composition becomes homogeneous or essentially homogeneous.

Optionally, the entrained polymer compositions of the invention may include channeling agents which form channels between the surface of the entrained polymer and its interior in order to transmit a selected material (e.g., moisture) to the entrained zeolite active agent (to adsorb the moisture). As discussed above, optional embodiments of the invention include entrained polymer compositions that may be two phase formulations (i.e., comprising a base polymer and active agent, without a channeling agent) or three phase formulations (i.e., comprising a base polymer, active agent and channeling agent). Entrained polymers are described, for example, in U.S. Pat. Nos. 5,911,937, 6,080,350, 6,124,006, 6,130,263, 6,194,079, 6,214,255, 6,486,231, 7,005,459, and U.S. Pat. Pub. No. 2016/0039955, each of which is incorporated herein by reference as if fully set forth.

It is an aspect of the invention that the zeolite compositions to be admixed or blended with the base polymers herein are first prepared by cation exchange of the crude zeolite by treating the crude zeolite with a solution comprising mono, di or trivalent cations to form a treated cation exchanged zeolite; optionally, repeating the treatment one or more times depending on the degree and amount of cation exchange desired; then drying the treated cation exchanged zeolite to provide a dried cation exchanged zeolite, wherein the dried cation exchanged zeolite has a water adsorption capacity that is greater than the water adsorption capacity of the crude zeolite before cation exchange treatment; then optionally, repeating these step again one or more times. As used herein, the term "crude" refers to the raw or unaltered state of a zeolite material before its ion exchange, generally cation exchange herein, in accordance with the method of the invention. In an optional preferred embodiment, the crude zeolite used herein is a zeolite comprising sodium.

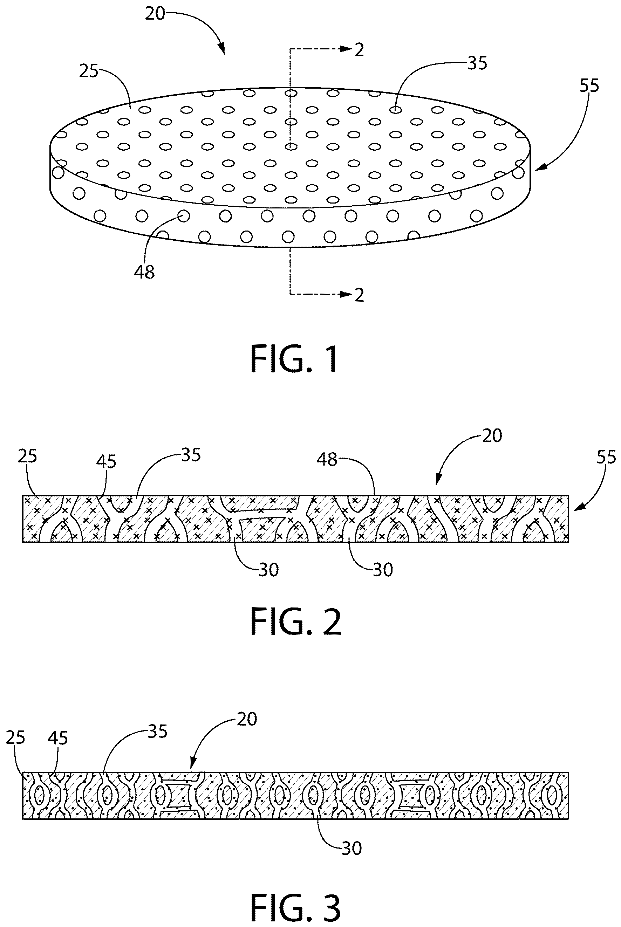

Referring now in detail to the Figures, like reference numerals refer to like parts throughout. Shown in Figures 1 to 4 are exemplary entrained polymers 10 useable in conjunction with aspects of the invention. The entrained polymers 10 each include a base polymer 25, a channeling agent 35 and the active agent being the zeolite 30. As shown, the channeling agent 35 forms interconnecting channels 45 through the base polymer 10. At least some of the zeolite 30 is contained within these channels 45, such that the channels 45 communicate between the zeolite 30 and the exterior of the entrained polymer 10 via channel openings 48 formed at outer surfaces of the entrained polymer 25. While a channeling agent, e.g., 35, is preferred, in optional aspects, the invention includes entrained polymers that do not include channeling agents.

Suitable base polymers include thermoplastic polymers, e.g., polyolefins such as polypropylene and polyethylene, polyhydroxyalkanoate (PHAs), polylactique acid (PLA), polybutylene succinate (PBS), polyisoprene, polybutadiene, polybutene, polysiloxane, polycarbonates, polyamides, ethylene-vinyl acetate copolymers, ethylene-methacrylate copolymer, poly(vinyl chloride), polyvinylpyrrolidone, polystyrene, polyesters, polyanhydrides, polyacrylianitrile, polysulfones, polyacrylic ester, acrylic, polyurethane and polyacetal, or copolymers or combinations thereof.

Suitable channeling agents include a polyglycol such as polyethylene glycol (PEG), ethylene-vinyl alcohol (EVOH), polyvinyl alcohol (PVOH), glycerin polyamine, polyurethane and polycarboxylic acid including polyacrylic acid or polymethacrylic acid. Alternatively, the channeling agent 35 can be, for example, a water insoluble polymer, such as a propylene oxide polymerisate-monobutyl ether, such as Polyglykol B01/240, produced by Clariant Specialty Chemicals. In other embodiments, the channeling agent could be a propylene oxide polymerisate monobutyl ether, such as Polyglykol B01/20, produced by Clariant Specialty Chemicals, propylene oxide polymerisate, such as Polyglykol D01/240, produced by Clariant Specialty Chemicals, ethylene vinyl acetate, nylon 6, nylon 66, or any combination of the foregoing.

In general, it is believed that the higher the active agent concentration in the polymer compositions, the greater the sorption will be of the final composition. However, too high a concentration of the zeolite could cause the entrained polymer to become more brittle and the molten mixture of active agent, base polymer and channeling agent to be more difficult to either thermally form, extrude, injection mold or heat melt.

In embodiments of the invention, the loading level of the zeolite within the entrained polymer composition can range from 10% to 80%, preferably 20% to 70%, more preferably from 30% to 60%, and even more preferably from 25% to 55% by weight with respect to the total weight of the entrained polymer. Optionally, the base polymer may range from 10% to 90% by weight of the total composition, preferably from 20% to 80% by weight. When an optional channeling agent is employed, the channeling agent may be provided in a range of 2% to 15% by weight, optionally 2% to 10%, preferably about 5%.

Referring to Figure 1, an insert 20, constructed from the entrained polymer of the present invention is illustrated. The insert 20 is in the form of a plug 55 that may be deposited into a package or a chamber of a container in order to scavenge moisture from a moisture-producing object placed within the container.

Referring to Figure 2, a cross-sectional view is shown of the plug 55 that has been constructed from an entrained polymer 10 comprising the base polymer 25 that has been uniformly blended with the zeolite 30 and the optional channeling agent 35. In the illustration of Figure 2, the entrained polymer has been solidified so that interconnecting channels 45 have formed throughout the entrained polymer 10 to establish passages throughout the solidified plug 55. As may be appreciated from both Figures 1 and 2, the passages terminate in channel openings 48 at exterior surfaces of the plug 55 creating more surface area for the zeolite to scavenge moisture from the environment surrounding the polymer composition.

Figure 3 illustrates the embodiment of a plug 55 similar in construction and makeup to the plug 55 of Figure 2, where interconnecting channels 45 are very fine compared to those of Figure 2. This can result from the use of a dimer agent (i.e., a plasticizer) together with a channeling agent 35. The dimer agent may enhance the compatibility between the base polymer 25 and the channeling agent 35. This enhanced compatibility is facilitated by a lowered viscosity of the blend, which may promote a more thorough blending of the base polymer 25 and channeling agent 35, which under normal conditions can resist combination into a uniform solution. Upon solidification of the entrained polymer 10 having a dimer agent added thereto, the interconnecting channels 45 which are formed throughout have a greater dispersion and a smaller porosity, thereby establishing a greater density of interconnecting channels throughout the plug 55.

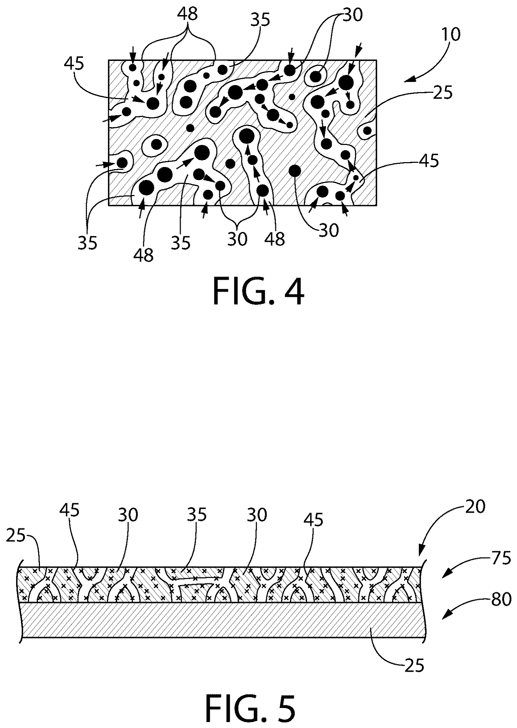

Figure 4 illustrates an embodiment of an entrained polymer 10 according to the invention, with zeolite as the active agent 30. The arrows indicate the path of the moisture-containing gas or, optionally, a liquid, from the exterior of the entrained polymer 10, through the channels 45, to the particles of the zeolite 30, which absorbs or adsorbs the moisture.

The interconnecting channels 45, such as those disclosed herein, facilitate transmission of the moisture through the base polymer 25, which generally resists permeation of the gas or liquid, thus acting as a barrier thereto. For this reason, the base polymer 25 itself acts as a barrier substance within which an active agent 30 may be entrained. The interconnecting channels 45 formed of the channeling agent 35 provide pathways for the gas or liquid to move through the entrained polymer 10. Without these interconnecting channels 45, it is believed that relatively small quantities of the desired material would be transmitted through the base polymer 25 to or from the active agent 30. As such, the gas or liquid is transmitted to the zeolite 30, and is absorbed or adsorbed by the zeolite 30 in amounts much greater than by substances wherein the zeolite is not entrained. Accordingly, in one aspect, an entrained polymer, comprising zeolite as a sorption agent, and a base polymer are used in embodiments of the invention. In another aspect, an entrained polymer, comprising zeolite as a sorption agent, a base polymer, and a channeling agent may be used in embodiments of the invention.

Figure 5 illustrates a sheet or film 75 formed of the entrained polymer 20 used in combination with a barrier sheet 80 to form a composite, according to an optional aspect of the invention. The characteristics of the sheet or film 75 are similar to those described with respect to the plug 55. The barrier sheet 80 may be a substrate such as foil and/or a polymer with low moisture or oxygen permeability. The barrier sheet 80 is compatible with the entrained polymer sheet or film 75 and is thus configured to thermally bond thereto, when the sheet or film 75 solidifies after dispensing.

In one embodiment, the loading level of the zeolite ranges from 10% to 80%, optionally from 20% to 70%, optionally from 30% to 60%, optionally from 40% to 50%, optionally from 45% to 65%, optionally from 45% to 60%, optionally from 45% to 55%, optionally from 50% to 70%, optionally from 50% to 60%, optionally from 55% to 65%, optionally from 55% to 60% by weight with respect to the total weight of the entrained polymer.

In one embodiment, the concentration of the base polymer ranges from 10% to 80%, optionally from 20% to 70%, optionally from 30% to 60%, optionally from 40% to 50%, optionally from 45% to 65%, optionally from 45% to 60%, optionally from 45% to 55%, optionally from 50% to 70%, optionally from 50% to 60%, optionally from 55% to 65%, optionally from 55% to 60%, 15% to 75%, optionally from 25% to 70%, optionally from 35% to 60%, optionally from 45% to 55%, optionally from 20% to 50%, optionally from 20% to 40%, optionally from 20% to 35%, optionally from 25% to 60%, optionally from 25% to 50%, optionally from 25% to 40%, optionally from 25% to 30%, optionally from 30% to 60%, optionally from 30% to 50%, optionally from 30% to 45%, optionally from 40% to 60%, optionally from 40% to 50% by weight of the entrained polymer.

In one embodiment, the optional channeling agent ranges from 2% to 25%, optionally from 2% to 15%, optionally from 5% to 20%, optionally from 5% to 15%, optionally from 5% to 10%, optionally from 8% to 15%, optionally from 8% to 10%, optionally from 10% to 20%, optionally from 10% to 15%, or optionally from 10% to 12% by weight with respect to the total weight of the entrained polymer.

In one embodiment, an entrained polymer may be a two phase formulation including 20% to 50% by weight of the adsorbent agent, 50% to 80% by weight a base polymer (such as polypropylene). The base polymer are not particularly limited.

In one embodiment, an entrained polymer may be a three phase formulation including 20% to 45% by weight of the adsorbent agent, 30% to 75% by weight a base polymer (such as polypropylene), and 2% to 12% by weight a channeling agent. The base polymer and the channeling agent are not particularly limited.

The methods of producing entrained polymers 10 according to the present invention are not particularly limited. Examples include blending a base polymer 25 and a channeling agent 35. The active agent 30 is blended into the base polymer 25 either before or after adding the channeling agent 35. All three components are uniformly distributed within the entrained polymer 10 mixture. The entrained polymer thus prepared contains at least two or three phases.

The form of the entrained polymer is not limited. Optionally, such entrained polymer may be formed into a component in the form of a film, a sheet, a disk, a pellet, a package, a container, a cover, a plug, a cap, a lid, an insert, a stopper, a cork, a gasket, a seal, a washer, a liner, or a ring.

The polymer compositions of the invention can be incorporated into any types of packaging materials and are not limited, such as plastic, paper, glass, metal, ceramic, synthetic resin or a combination thereof. As discussed above, containers and packaging having water adsorption properties are highly desired in various industries and the polymer compositions of the invention address and meet many packaging needs, such as, for example, food packaging.

Further methods and materials utilizing the zeolite entrained polymer compositions disclosed herein for water or ammonia adsorption are more fully described and will be obvious to those skilled in the art from the Detailed Description of the Invention as well as from the Examples set forth in detail below.

### EXAMPLES

Polymer composite films containing cation exchanged LTA-type and FAU-type zeolites were prepared using MgCl2 and LiCl aqueous solution. The cation choice was made to have the smallest monovalent and divalent cations in order to maximize the available microporous volume. The prepared samples were then fully characterized and their adsorption performances were systematically evaluated by comparing their nitrogen and water adsorption isotherms using the following characterization techniques. The cation exchanged zeolites were denoted as follows: cAy or cXy with "c" referring to the major compensating cation and y to the number of exchange steps, for example MgA-1 designating zeolite A exchanged once with Mg2+ cation.

### Characterization Techniques

(1) X-Ray Fluorescence (XRF): Chemical analyses were performed using an X-Ray Fluorescence (XRF) spectrometer (PANalytical Zetium (4 kW) on samples previously pressed into 13 mm diameter pellets for 10 minutes at a pressure of 5 tons to determine the exchange ratio of the cations within the samples.
(2) Inuctive Coupled Plasma Optical Emission Spectroscopy (ICP-OES): The samples underwent acid digestion at room temperature for 24 hours (0.05 gr of sample + 3 ml of 48.9% Fluoridic Acid (HF)). The solution thus obtained was diluted to 30 ml and then filtered at 0.45 µm before analysis using a Thermo ICAP 6300 DUO equipment.
(3) X-Ray Diffraction (XRD): X-Ray diffraction patterns were recorded on a PANalytical MPD X'Pert Pro diffractometer operating with Cu Kα radiation (Kα = 0.15418 nm) equipped with an X'Celerator real-time multiple strip detector (active length = 2.12°2θ). The XRD powder patterns were collected at 22°C in the 3°<2θ<50° range, by step at 0.017° in 2θ and with a time of 220 s by step.
(4) Scanning Electron Microscopy (SEM) and Energy Dispersive X-Rays spectroscopy (EDX): SEM and EDX mappings were obtained on a Philips XL 30 FEG microscope. Before analysis, the samples were coated with a fine carbon layer using a BAL-TEC SCD004 sputter coating system in order to improve electrical conductivity. Composite samples (granulates and molded parts) were immersed in a polymer resin before being analyzed. After hardening, the polymer resin is polished until cutting samples in one plan to obtain a representation of the zeolite crystals distribution.
(5) Solid-state Nuclear Magnetic Resonance (Solid-state NMR): 29Si solid-state Magic Angle Spinning (MAS) NMR spectra with 1H decoupling were recorded on a Bruker AVANCE II 300WB spectrometer (B0 = 7.1 T) operating at 59.59 MHz with a 2.4 µs pulse duration corresponding to a flip angle of π/6 and 80 s of recycling delay. Samples were packed in a 7 mm cylindrical zirconia rotor and spun at a spinning frequency of 4 kHz. 29Si chemical shifts were referenced to tetramethylsilane (TMS). 27A1 MAS NMR spectra were recorded on a Bruker AVANCE II 400WB spectrometer (B0 = 9.4 T) operating at 104.2 MHz using a 4 mm cylindrical zirconia rotor and spun at a spinning frequency of 12 kHz. 27Al chemical shifts were given relative to an aqueous solution of aluminum nitrate (Al(NO3)3). Typical acquisition parameters included a pulse duration of 0.5 µs corresponding to a flip angle of π/12 and 1 s recycle delay. Decompositions of the NMR spectra to extract the proportion of the corresponding species were performed with the DMfit software.
(6) Tensile test measurements: Tensile tests were carried out on a modernized INSTRON ZWICK dynamometer equipped with a 1kN force cell. Specimen were tested at 10 mm/min until failure. The mean values of Young's modulus were determined for each sample.
(7) N2 adsorption-desorption measurements: The textural characteristics of the crude and ion-exchanged prepared zeolite samples were determined from N2 adsorption-desorption isotherms performed at -196°C using a Micromeritics ASAP2420 instrument. Prior to sorption measurement, the samples (50-100 mg) were outgassed under vacuum at 90°C for 1 h and 300°C for 15 h to remove any physisorbed water. The Brunauer-Emmett-Teller specific surface area (SBET) was calculated by using the BET method while the t-plot method was used to determine the sample microporous volume (Vm).
(8) Water adsorption measurement: Water adsorption isotherms of crude and prepared zeolite samples were performed at 25°C using a Micromeritics ASAP 2020 instrument. Prior to the water adsorption measurements, water (analyte) was flash frozen under liquid nitrogen and then evacuated under dynamic vacuum at least 5 times to remove any gases in the water reservoir. The samples (50-100 mg) were outgassed under vacuum at 90°C for 1 h and 300°C for 24 h to remove the physisorbed water. The water adsorption capacity of the samples was determined from the water adsorption isotherms.

Water adsorption kinetics of the crude material, exchanged zeolites and composite materials containing the crude and exchanged zeolites (NaA-0, LiA-1 and MgA-1) were performed by following the weight variation at 30°C at a relative humidity of 80% using a Memmert HCP 108 humidity chamber. Samples were taken from the sealed bags in which they were stored after being manufactured to avoid moisture intake and directly used for measurements.

### EXAMPLE 1

### Materials:

(a) Zeolites: LTA-type zeolite (NaA) and FAU-type zeolite (NaX) were provided in powder form from CSP Technologies. Lithium chloride (LiCl, ACS Reag. Ph. Eur >99%) and magnesium chloride (MgCl2.6H2O, ACS-ISO for analysis >99%) salts were purchased from Merck and Carlo Erba, respectively. (b) Polymers: Polypropylene, polyethylene glycol (Relative molar mass 4000 g/mol) and titanium dioxide were obtained from Aptar CSP Technologies.

### Cation exchange:

The zeolites for incorporation into polymer composites according to the invention were prepared by ion exchange of NaA and NaX zeolites. Sodium (Na+) compensating cations present in the parent zeolites were exchanged with magnesium (Mg2+) or lithium (Li+) cations by a cationic exchange process in MgCl2 and LiCl aqueous solution. The raw zeolite (20 g) was blended with 1 M cationic aqueous solution that was prepared by mixing LiCl salt (16.96 g) or MgCl2 salt (81.32 g) with 400 mL of demineralized water. The reaction mixture was then heated at 80°C for 2 h under stirring. The mass ratio of the reaction mixture was 1 g of zeolite for 20 mL for electrolyte aqueous solution. The pH value of this mixture was between 7 and 9. The zeolites were then filtered by centrifugation (8000 rpm, 5 min) and washed three times under stirring (10 min) with cold demineralized water (~200 mL). All the samples were then dried for 24 h minimum, at 80°C. The cationic exchange process was repeated 4 times. After each cationic exchange, the samples were fully characterized using the techniques set forth above.

### Results and Discussion:

1.1 X-Ray Fluorescence analysis and results were reported in Table 1 and Table 2.

**Table 1: Chemical composition of LTA-type and FAU-type zeolites and of their associated magnesium forms determined by XRF (Si/Al, Na/Al, Mg/Al and Cl/Al Molar ratio)**

| **Samples** | | | | | |
|---|---|---|---|---|---|
| **Exchanged with magnesium** | **Molar ratio^{a,b}** | | | | **Global charge ratio** |
| | **Si/Al** | **Na/Al** | **Mg/Al** | **Cl/Al** | **(Na + 2 Mg) /Al** |
| **NaA-0** | **0.97** | **1.07** | **0** | **0** | **1.07** |
| **MgA-1** | **0.97** | **0.44** | **0.34** | **0.08** | **1.12** |
| **MgA-2** | **1.04** | **0.36** | **0.42** | **0.07** | **1.20** |
| **MgA-3** | **1.06** | **0.22** | **0.49** | **0.07** | **1.20** |
| **MgA-4** | **1.03** | **0.15** | **0.50** | **0.06** | **1.15** |
| **NaX-0** | **1.23** | **1.06** | **0** | **0** | **1.06** |
| **MgX-1** | **1.23** | **0.42** | **0.32** | **0** | **1.06** |
| **MgX-2** | **1.33** | **0.36** | **0.40** | **0** | **1.16** |
| **MgX-3** | **1.34** | **0.26** | **0.48** | **0** | **1.22** |
| **MgX-4** | **1.29** | **0.20** | **0.48** | **0** | **1.16** |

| | | | | | |
|---|---|---|---|---|---|
| ^{a} Experimental error 3% ^{b} The ratios are corrected from the slight amount of extra framework aluminum. | | | | | |

The chemical analysis in Table 1 shows that the Si/Al ratio obtained was approximately 1 (one) for the crude LTA-type zeolite and around 1.20 for the crude FAU-type zeolite. The concomitant sodium loss and magnesium increase as shown in Table 1 as the cationic exchange progresses is an indication of the successful cationic exchange. (Slight variation of the Si/Al ratio is observed as the cationic exchange steps progress pointing towards negligible aluminum extraction.) Since LTA-type and FAU-type zeolites are different in terms of structure and cation positions, only trends were and should be compared.

The overall charge ratio (Na/Al + 2 Mg/Al) required in order to compensate the negative charges generated by the presence of the aluminum atom was greater than that of the crude material. Complete cation exchange was not observed possibly due to the difficulty of exchanging the sodium cations present in the sodalite cage microstructure because of a small cage aperture. Notably, the cationic exchange process occurred without causing modification to the global Si/Al molar ratio of both zeolites making an efficient technique for chemical modification of zeolites.

**Table 2: Chemical composition of LTA-type and FAU-type zeolites and of their associated lithium forms determined by ICP-OES (Si/Al, Na/Al and Li/Al Molar ratio)**

| **Samples** | **Molar ratio^{a}** | | | **Global charge ratio** |
|---|---|---|---|---|
| **Exchanged with lithium** | | | | |
| | **Si/Al** | **Na/Al** | **Li/Al** | **Na + Li /Al** |
| **NaA-0** | **1.04** | **1.07** | **0** | **1.07** |
| **LiA-1** | **1.11** | **0.41** | **0.37** | **0.78** |
| **LiA-2** | **1.14** | **0.15** | **0.60** | **0.75** |
| **LiA-3** | **1.07** | **0.13** | **0.76** | **0.89** |
| **LiA-4** | **1.00** | **0.12** | **0.93** | **1.05** |
| **NaX-0** | **1.25** | **0.95** | **0** | **0.95** |
| **LiX-1** | **1.36** | **0.34** | **0.41** | **0.75** |
| **LiX-2** | **1.33** | **0.16** | **0.71** | **0.87** |
| **LiX-3** | **1.32** | **0.14** | **0.75** | **0.89** |
| **LiX-4** | **1.27** | **0.11** | **0.84** | **0.95** |

| | | | | |
|---|---|---|---|---|
| ^{a} Experimental error 5% | | | | |

Table 2 shows the successful preparation of lithium form zeolites. For LTA-type zeolites, the concomitant sodium loss (Na/Al molar ratio from 1.07 to 0.12) and lithium increase (Li/Al molar ratio from 0 to 0.93) for LiA-1 to LiA-4 samples was an indication of the successful exchange process. The same trend was observed with FAU-type zeolite.

Unlike magnesium exchange, the overall charge ratio (Na/Al + Li/Al) required in order to compensate the negative charges generated by the presence of aluminum atoms and thus maintain the neutrality of the framework was lower than expected. For LTA-type zeolite, the values of these ratios were equal to 0.78, 0.75 and 0.89 for LiA-1, LiA-2 and LiA-3, respectively, and to 0.75, 0.87, 0.89 and 0.95 for FAU-type zeolite LiX-1 to LiX-4.

### 1.2 X-Ray Diffraction characterization.

The XRD patterns of the crude and cation exchanged LTA-type zeolites with Li⁺ and Mg²⁺ were analyzed. The unit cell parameters (a, b and c) of the LTA-type zeolite with cubic system and Fm-3c as space group were determined with X'Pert HighScore and STOE Win XPOW software according to Werner algorithm. For the control crude LTA zeolite samples, a=b=c were equal to 24.57 Å. After the cationic exchange, the unit cell parameters were a=b=c= 24.25 Å and 24.53 Å for LiA-1 and MgA-1, respectively. After the cationic exchange, the smaller cation radius of lithium (0.69 Å) and magnesium (0.72 Å) in comparison with sodium (1.02 Å), lead to a structure contraction. These results were also an indication of successful cation exchange in the prepared zeolite material. No impurities were detected by XRD analysis. All the XRD patterns of the prepared samples were similar to the XRD patters of the parent materials indicating that cationic exchange did not significantly affect the structure of the zeolite thereby maintaining the water absorption properties of the zeolite in preparation of its subsequent incorporation into composite materials.

### 1.3 Scanning Electron Microscopy (SEM) and Energy Dispersive X-Rays spectroscopy (EDX) characterization.

Images of crude materials as compared to samples (with Li+ and Mg2+) of LTA-type and FAU-type zeolites prepared according to the method of the invention were compared. The images showed the crystallized phase with cubic morphology characteristics of LTA-type zeolites each having particle sizes ranging from 1 to 5 µm. The FAU-type zeolite prepared according to the method of the invention exhibited interconnected bipyramidal crystals with a pseudo-spherical morphology while a bipyramidal morphology was expected. The particle size ranged from approximately 1 to 4 µm. With respect to samples prepared with magnesium cations, for both LTA-type and FAU-type zeolites, the morphology of the crystals was observed to be preserved but small particles seemly covering the surface of the crystals. XRF and EDX analysis set forth in Table 1 showed a loss of the sodium cations after the preparation process in favor of the selected new cation Mg2+.

The elemental distribution of Si, Al, Na and Mg in the samples was studied using EDX mapping with the SEM images above. Each white pixel on the imaging showed the presence of the corresponding atom. The loss of sodium cations in favor of the exchanged cation (Li+ or Mg2+) was confirmed by the loss of intensity (whiteness) between EDX Na mapping shown on prepared materials compared to the samples of the raw materials. The images showed also a uniform distribution of magnesium atoms in the particles which also indicated success of the exchange process. As above, both LTA-type and FAU-type zeolites exchanged with magnesium cations were covered with small nanoparticles.

### 1.4 Solid-state Nuclear Magnetic Resonance (NMR)

MAS NMR was performed to study the local environment of 29Si and 27Al and corresponding atoms after cationic exchange of NaA-0 and the associated MgA-1 to MgA-4 samples and LiA-1 to LiA-4 samples. It was observed that the local environment of aluminum atoms was less affected after Li exchange than after Mg exchange. The conditions of cationic exchange were identical for magnesium and lithium, indicating that lithium solution has less effect on zeolite structure. The five characteristic resonances demonstrated that the characteristic structure of FAU-type zeolite was maintained after ion exchange. It was noted that cationic exchange seems to favor the formation of octahedral aluminum atoms. A small increase of the Si/Al ratio suggests that a small extraction of aluminum atoms from the zeolite framework seems to occur as the exchange rate increases from 1 to 3. The MgX-4 sample exhibited a similar Si/Al ratio and similar amount of extra framework species than the parent sample. This could be due to variations during the washing process.

### 1.5 N2 Adsorption-desorption isotherms characterization.

The nitrogen adsorption isotherms of the crude zeolites and the cation exchanged zeolites were analyzed. No N2 adsorption was observed due to the position of Na+ cations near to the pore opening which obstruct the accessibility of N2 to the microporosity of the zeolite structure.

In contrast, MgA-1, 2, 3 and 4 ion exchanged samples enabled nitrogen diffusion through the porosity of LTA-type zeolite. The large adsorption capacity of all samples showed an ability of the zeolite prepared by the experimentation to adsorb nitrogen even in trace amounts. Only one cycle of ion exchange was sufficient to access the highest microporous volume. This first exchange corresponded to the replacement of 59% of the sodium initially present in the testing environment. Since samples were in powder form, the adsorption observed between p/p0 = 0.9 and 1 is thought to be attributed to the inter-particular porosity. It is thought that repetition of the steps would lead to additional exchange and replacement of the sodium ions.

The samples prepared with magnesium demonstrated a capacity up to 210 cm3.g-1 representing an increase of 24% of the adsorbed volume compared to the crude samples having an increase of 15% of the microporous volume (0.27 to 0.31 cm3.g-1). For all samples, the BET surface increased with the microporous volume, to approximately 550-600 m2.g-1 for LTA-type zeolite samples, approximately 738 m2.g-1 for crude FAU-type zeolite samples to approximately 860 m2.g-1 for magnesium prepared samples.

Without being limited to the mechanism of action, the increase of the adsorbed nitrogen amount between the sodium form and the magnesium form may be due by the position of the cation within the microscopic cage structure. The same behavior was observed on the LTA-type zeolites exchanged with lithium cation. After sodium exchange with magnesium, nitrogen molecules can reach the porous structure. All these parameters allowed an increase of the available microporous volume and adsorption capacities (See Table 3.)

When FAU-type zeolite samples were exchanged with lithium, a capacity of 205 cm3.g-1 to 210 cm3.g-1 (microporous volume of 0.32 to 0.33 cm3.g-1) representing an increase of 21% to 24% of the adsorbed volume and 19% to 22% of the microporous volume in comparison with the crude NaX-0 sample.

### 1.6 H2O Adsorption isotherms characterization

The water adsorption capacities were determined at p/p0 = 0.2 (representing the adsorption in the microporosity of the samples) and reported for each sample in Table 3. A gain of the water adsorption capacity was observed for each exchanged sample in comparison with their associated raw samples, in agreement with nitrogen adsorption analysis.

**Table 3: Rate of exchange (negative charges of the framework compensated by the new cation), BET surface area (S_{BET}), microporous volume (Vₘ) and water adsorption capacity for LTA-type and FAU-type zeolites modified by Li⁺ and Mg²⁺ ions.**

| **Samples** | **Sodium cation exchange rate** | **S_{BET}^{c}** | **Vₘ^{d}** | **Water adsorption capacity^{e}** | **Water adsorption capacity^{f}** |
|---|---|---|---|---|---|
| | **(%)** | **(m².g⁻¹)** | **(cm³.g⁻¹)** | **(mmol.g⁻¹)** | **(Wt.%)*** |
| **NaA-0** | **0** | **x** | **x** | **11.7** | **21.1** |
| **MgA-1** | **59^{a}** | **577** | **0.22** | **14.7** | **26.5** |
| **MgA-2** | **66^{a}** | **605** | **0.22** | **14.9** | **26.8** |
| **MgA-3** | **79^{a}** | **583** | **0.21** | **15.2** | **27.4** |
| **MgA-4** | **86^{a}** | **605** | **0.22** | **15.3** | **27.5** |
| **NaX-0** | **0** | **738** | **0.27** | **14.0** | **25.3** |
| **MgX-1** | **60^{a}** | **863** | **0.31** | **17.3** | **31.2** |
| **MgX-2** | **66^{a}** | **862** | **0.31** | **18.1** | **32.6** |
| **MgX-3** | **75^{a}** | **854** | **0.31** | **18.2** | **32.8** |
| **MgX-4** | **81^{a}** | **805** | **0.30** | **17.2** | **31.0** |
| **LiA-1** | **61^{b}** | **x** | **x** | **12.7** | **22.8** |
| **LiA-2** | **86^{b}** | **x** | **x** | **12.7** | **22.9** |
| **LiA-3** | **88^{b}** | **x** | **x** | **12.9** | **23.3** |
| **LiA-4** | **89^{b}** | **x** | **x** | **13.7** | **24.7** |
| **LiX-1** | **64^{b}** | **877** | **0.33** | **16.4** | **29.5** |
| **LiX-2** | **83^{b}** | **862** | **0.33** | **16.6** | **29.9** |
| **LiX-3** | **85^{b}** | **866** | **0.33** | **16.9** | **30.4** |
| **LiX-4** | **88^{b}** | **841** | **0.32** | **18.0** | **32.4** |

| | | | | | |
|---|---|---|---|---|---|
| ^{a} Value determined by XRF measurement. Determined from Na/Al ratio (See Table 1) ^{b} Value determined by ICP-OES measurement. Determined from Na/Al ratio (See Table 2) ^{c} Value determined by the BET method. ^{d} Value determined by the t-plot method. ^{e} Value determined from water adsorption isotherm. ^{f} Value obtained by multiplying the amount of adsorbed water in mmol/g by the molecular weight of water. x → Not porous to nitrogen molecule | | | | | |

According to Table 3, the NaA-0 sample had a water adsorption capacity of 21.1 Wt.%. When the samples were cation exchanged with magnesium, the capacity increased from 26.5 Wt.% (MgA-1) to 27.5 Wt. % (MgA-4) representing an increase of 26% to 30% of the adsorbed volume in comparison with NaA-0. Increasing the number of cation exchange steps from one to four did not increase significantly the water adsorption capacity of the samples though minor variations were observed. The adsorption observed between p/p0 = 0.9 and 1 was attributed to the inter-particular porosity.

From the water adsorption isotherm of NaX-0 zeolite, a water adsorption capacity of 25.3 Wt.% was deduced. When the sodium samples were exchanged with magnesium, the water capacity increased from 31.2 Wt.% (MgX-1) to 32.8 Wt. % (MgX-3) i.e. an increase of 23% to 30% of the adsorbed water in comparison to NaX-0.

For lithium exchanged LTA-type samples, a water adsorption capacity of 24.7 Wt.% for LiA-4 sample was observed while exchanges 1, 2 and 3 showed adsorption capacities of 22.8 Wt.%, 22.9 Wt.% and 23.3 Wt.% respectively. The global water adsorption increased between 8% and 17% in comparison with NaA-0.

The lithium form of FAU-type zeolite displayed in Fig. 11d showed a water adsorption capacity of 29.5 Wt.% for LiX-1 while exchanges LiX-2, LiX-3 and LiX-4 showed adsorption capacities of 29.9 Wt.%, 30.4 Wt.% and 32.4 Wt.%, respectively. The global water adsorption increased between 17% and 28% which indicates that using lithium for cationic exchange with LTA-type or FAU-type zeolites is less effective than magnesium for water adsorption optimization. These results show that modifying the charge compensating cations of LTA-type and FAU-type zeolites change the water adsorption behavior.

Water adsorption capacities improved up to 30% of the adsorbed volume for LTA-type and FAU-type zeolites exchanged with magnesium, up to 24% for LTA-type zeolite exchanged with lithium and up to 28% for FAU-type zeolite exchanged with lithium. Lithium exchanged samples showed an increase of the water adsorbed volume compared to the crude sodium sample. Magnesium as compensating cation seemed to show higher water adsorption capacities despite surface coating of the particles.

### EXAMPLE 2

### Materials:

(a) Zeolites: LTA-type zeolite (NaA) and FAU-type zeolite (NaX) were provided in powder form from CSP Technologies. Lithium chloride (LiCl, ACS Reag. Ph. Eur >99%) and magnesium chloride (MgCl2.6H2O, ACS-ISO for analysis >99%) salts were purchased from Merck and Carlo Erba, respectively. (b) Polymers: Polypropylene, polyethylene glycol (Relative molar mass 4000 g/mol) and titanium dioxide were obtained from Aptar CSP Technologies.

### Large scale cation exchange:

NaA zeolite was modified by exchanging the sodium compensating cation present in the parent zeolite framework with magnesium (Mg2+) or lithium (Li+) cations by a cationic exchange process using 1M MgCl2 and LiCl aqueous solution, respectively. 10 h before the experiment, the container with the reaction mixture (polypropylene bottles of 10 L) containing 7.5 L of demineralized water were placed into the dedicated equipment and heated to let the temperature stabilize at 80°C. The day of the experiment, 1 M salt solutions of MgCl2 or LiCl were prepared by adding LiCl salt (317.93 g) or MgCl2 salt (1524.83 g) to the heated 7.5 L of demineralized water under stirring. The pH value of these electrolyte aqueous solutions were measured to be approximately 5.8 and 5.5 for the LiCl and MgCl2 salt solutions, respectively. 468.75 g of each crude hydrated zeolite was then blended with the 1M electrolyte aqueous solution. The mass ratio of the reaction mixture was 1 g of dehydrated zeolite for 20 mL of electrolyte aqueous solution. The pH value of the mixtures was approximately 8.5 and 10.9 for the MgCl2 and LiCl salt solutions, respectively. The reaction mixture was then maintained at 80°C for 2 h under stirring. After 2 h, the reaction mixtures (30L = 4 bottles per sample) were all washed with cold demineralized water (60 L) in a 100 L polypropylene container under mechanical stirring (10 min). The mixture was then filtered using a Rousselet-Robatel RC40VXR centrifuge (3000 rpm, until no more waste water was observed, 5-10 min). 60 L of additional demineralized water were sprayed onto the agglomerated zeolite for more washing. The centrifugation was stopped after no more waste water was observed indicating that the zeolite powder was essentially globally dry. All the samples were then dried at 100°C for 3 days. The cation exchanged zeolite samples obtained were denoted as follows: cA-y with c the major compensating cation and y is the number of exchange experiment. The samples were fully characterized.

### Activation of zeolite powders used for composite manufacturing:

Before use in preparation of the polymer composite, the zeolite powders were dehydrated in order to activate their adsorption properties. Zeolite powders were placed in a PYREX^{®} glass tray (Corning Inc.)(1.8 Kg of zeolite per glass tray) and the temperature criteria set forth in Table 4 was applied using a Nabertherm Controller B170 oven. After being dehydrated, the zeolite powders were each transferred into moisture tight aluminum bags to preserve adsorption properties, then the bags were sealed. Each aluminum bag was then transferred into a second sealed aluminum bag for more protection against moisture as a precaution.

**Table 4: Temperature program for the dehydration of zeolite powder samples.**

| | **Temperature (°C)** | **Time (h)** | **Observations** |
|---|---|---|---|
| **Heating phase** | **20 → 500** | **8** | **Temperature rate ≈ 1°C/min** |
| | **500** | **6** | **Holding time** |
| **Cooling phase** | **500 → 200** | | **Cooling until 200°C** |

### Composite material components:

Composite formulations containing the prepared zeolite powder samples set forth in Table 5 were prepared the day prior to the day of manufacture of composite materials by mixing the necessary quantities of each component into aluminum bags that were sealed to preserve the adsorption properties of the zeolites and stored until use. 2 kg of each composite formulation were prepared and separated in two aluminum bags (2x1 Kg). For each formulation, a precision balance with 0.001 g readability was used to weigh the non-sensitive constituents (polypropylene, polyethylene glycol and titane dioxide) while a precision balance with 10 g readability was used in a moisture protected area (<10% relative humidity) for weighing the moisture sensitive zeolites. Before being shaped into composite forms, contact with the atmosphere of the components within the aluminum bags, especially the zeolite powders, was minimized to limit potential loss of adsorption performances.

**Table 5: Composition of the formulation A-101 containing the crude NaA-0, lithium or magnesium exchanged zeolite samples.**

| **Formulation type** | **Used zeolite** | **Constituents** | **Introduced mass (g)** | | **Loading (Wt.%)¹** | |
|---|---|---|---|---|---|---|
| | | | **Bag 1** | **Bag 2** | **Bag 1** | **Bag 2** |
| **A-101*** | **NaA-0** | **LTA-type zeolite (NaA-0)** | 690 | 690 | 68.9 | 68.9 |
| | | **Polypropylene** | 250.9 | 250.5 | 25.1 | 25.0 |
| | | **Polyethylene glycol** | 50.5 | 50.8 | 5.0 | 5.1 |
| | | **Titanium dioxide²** | 10.2 | 10.1 | 1.0 | 1.0 |
| | | | | | | |
| **A-101*** | **LiA-1** | **LTA-type zeolite (LiA-1)** | 690 | 690 | 68.9 | 68.9 |
| | | **Polypropylene** | 250.7 | 250.9 | 25.1 | 25.1 |
| | | **Polyethylene glycol** | 50.0 | 50.3 | 5.0 | 5.0 |
| | | **Titanium dioxide²** | 10.2 | 10.3 | 1.0 | 1.0 |
| | | | | | | |
| **A-101*** | **MgA-1** | **LTA-type zeolite (MgA-1)** | 690 | 690 | 68.9 | 69.0 |
| | | **Polypropylene** | 251.2 | 250.3 | 25.1 | 25.0 |
| | | **Polyethylene glycol** | 50.5 | 50.1 | 5.0 | 5.0 |
| | | **Titanium dioxide²** | 10.3 | 10.0 | 1.0 | 1.0 |

| | | | | | | |
|---|---|---|---|---|---|---|
| **¹** Loading (Wt.%) = Introduced mass in comparison to the total mass of each components ² The titanium dioxide is added to the formulation in form of polypropylene pellets with 50% of TiO₂. * A-101 formulation type based on specific formulation from the company. | | | | | | |

Polymer materials containing sodium, lithium and magnesium compensating cations were prepared by extrusion into pellets/granulates. Polymer materials in molded part forms were formed from the pellets into molded parts. All formulations showed similar behaviors during both the extrusion and the injection processes. No significant differences were observed in terms of size, color or texture between the samples. Each sample was transferred into a sealed aluminum bag in order to avoid potential environmental pollution. All of the prepared polymer materials were then fully characterized.

**Table 6: Zeolite loading into the different composite materials for both granulates and molded parts.**

| **Sample** | **Target loading** | **(Zeolite loading)²** | **Sample** | **Target loading** | **(Zeolite loading)²** |
|---|---|---|---|---|---|
| | **(Wt.%)¹** | **(Wt.%)** | | **(Wt.%)¹** | **(Wt.%)** |
| **NaA-0-cg** | **68.9** | **66.0 (± 0.2)³** | **NaA-0-cmp** | | **68.1 (± 0.3)³** |
| **LiA-1-cg** | | **65.7 (± 0.3)³** | **LiA-1-cmp** | **68.9** | **66.8 (± 0.3)³** |
| **MgA-1-cg** | | **67.5 (± 0.1)³** | **MgA-1-cmp** | | **67.7 (± 0.6)³** |

| | | | | | |
|---|---|---|---|---|---|
| ¹ Based on theoretical loading from Table 2 ² Average of 3 measurements ³ Standard deviation | | | | | |

### Composite material preparation:

Each formulation above was used to manufacture composite materials in the form of granulates using an extrusion process with a Clextral BC21 mini extruder (die of extruder = 3 mm.) Granulates were then used for the manufacture of composite materials in the form of molded parts using the injection process (mold cavity, length = 208 mm and thickness = 0.8 mm) with Billion Dixit 2 Proxima H120-500 injection molding machine. The obtained composite material samples were denoted as follows: cA-y-Cg or cA-y-Cmp with c the major compensating cation of the contained zeolite, y the number of cationic exchange experiment undergone by the zeolite, C = composite, g = granulate form and mp = molded part form. For example, MgA-1 means zeolite A exchanged 1 time with MgCl2 aqueous solution while MgA-1-Cg means composite material in granulate form containing zeolite A exchanged 1 time with MgCl2 aqueous solution. After manufacture of the composite materials of the invention, the samples were fully characterized using the characterization techniques set forth above.

### Zeolite loading into composite materials formulations:

Loadings of raw and exchanged zeolite samples contained in composite materials were determined using a Nabertherm Controller B170 oven. Samples were taken from the sealed aluminum bags in which the composite materials were directly stored and protected after being manufactured. To determine the zeolite loading, a calcination program was carried out according to the conditions set forth in Table 7. Heating the composite sample caused decomposition of the organic matter. The samples were heated to 300°C then transferred into a desiccator containing phosphorus pentoxyde (P2O5) to avoid the trapping of water by the zeolite. After 10 min, the samples were weighed. The inorganic content corresponding to zeolite and titanium dioxide in the formulation was obtained by measuring the weigh difference. After correction of the titanium dioxide content, the zeolite loading was deduced.

**Table 7: Temperature program for the calcination of composite materials.**

| | **Temperature (°C)** | **Time (min)** | **Observations** |
|---|---|---|---|
| | **30** | **20** | **Holding time** |
| **Heating Phase** | **30 → 650** | **120** | **Temperature rate ≈ 1°C/min** |
| | **650** | **120** | **Holding time** |
| **Cooling phase** | **650 → 300** | | |

### Results:

### (1) H2O adsorption isotherms characterization

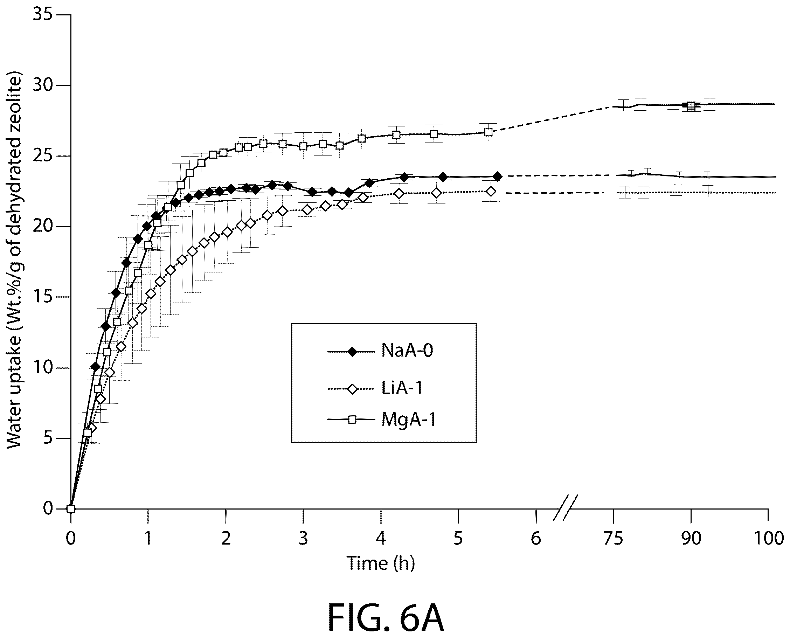

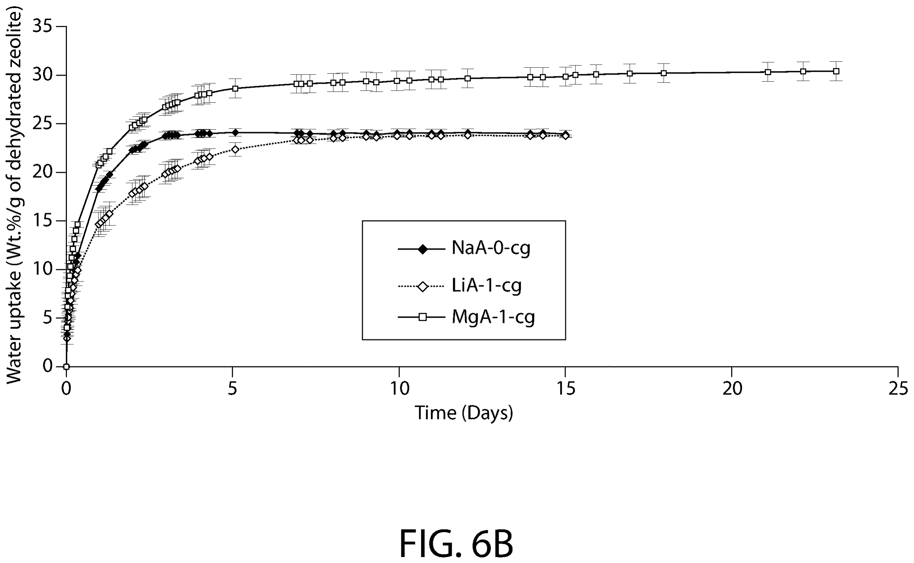

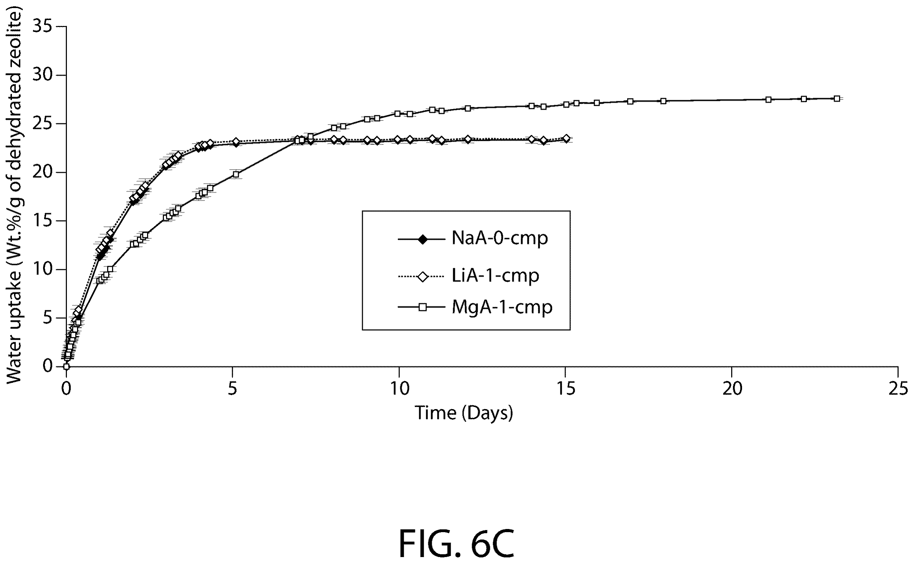

The water adsorption isotherms of the crude and exchanged LTA-type zeolites with Li+ and Mg2+ are displayed in FIGURES 6A, 6B and 6C. The water adsorption capacities were determined at p/p0 = 0.2 (representing the adsorption in the microporosity of the samples) and reported for each sample in Table 8. No adsorption was observed for the sodium and lithium forms since cations obstruct the pore opening. However, a gain in water adsorption occured for both exchanged sample (28.8 Wt.% and 22.7 Wt.% for MgA-1 and LiA-1 samples, respectively) in comparison with the sodium form.

**Table 8: Rate of exchange, BET surface area (S_{BET}), microporous volume (Vₘ) and water adsorption capacity for the crude and exchanged LTA-type zeolite.**

| **Samples** | **Rate of exchange^{a}** | **S_{BET}^{b}** | **Vₘ^{c}** | **Water adsorption capacity^{d}** | **Water adsorption capacity^{c}** |
|---|---|---|---|---|---|
| | **(%)** | | | | |
| | | **(m².g⁻¹)** | **(cm³.g⁻¹)** | **(mmol.g⁻¹)** | **(Wt.%)** |
| **NaA-0** | **0** | **x** | **x** | **12.1 (± 0.4)^{f}** | **21.8 (± 0.7)^{f}** |
| **MgA-1** | **58** | **693** | **0.26** | **16.0 (± 0.5)^{f}** | **28.8 (± 0.9)^{f}** |
| **LiA-1** | **51** | **x** | **x** | **12.6 (± 0.02)^{f}** | **22.7 (± 0.04)^{f}** |

| | | | | | |
|---|---|---|---|---|---|
| X → Not porous to nitrogen molecule ^{a} Rate of exchanged sodium cations. Value determined by XRF measurement. ^{b} Value determined by the BET method (average of 3 measurements). ^{c} Value determined by the the *t*-plot method (average of 3 measurements). ^{d} Value determined from water adsorption isotherm (taken at p/p⁰ = 0.2) (average of 2 measurements). ^{e} Value obtained by multiplying the amount of adsorbed water in mmol/g by the molecular weight of water MW = 18.02 g/mol (average of 2 measurements). ^{f} Standard deviation. | | | | | |

The results displayed in Table 8 represent an increase of the water uptake of 32% and 4% in comparison with the associated crude sample for MgA-1 and LiA-1 samples, respectively. It is thought that the difference of size of the lithium atoms in comparison with sodium atoms (Li+: 0.69 Å, Na+: 1.02 Å) lead to a gain of available microporous volume and consequently to an increase of the water adsorption capacity. This effect was also observed in the case of exchange with magnesium cations (0.72 Å) but due to the bivalent nature of the cation, only half of the replaced monovalent cations were needed. Thus, it is thought that both the difference of size and the number of required cations contributed to the gain of accessible microporous volume, explaining the significant increase of the water uptake for the MgA-1 sample. The MgA-1 sample provided the best water adsorption performance.

### (2) Calcination of composite materials

Since the adsorption properties of the composite materials are related to zeolite contents, the zeolite loading is one of the most crucial points to be controlled. To determine the zeolite loading, a calcination test was performed. By weight difference after a calcination program, the zeolite loading (inorganic) of granulates and molded parts was determined. The theoretical zeolite loadings and the experimentally determined zeolite loadings was recorded. The maximal deviation observed in comparison to the target loading was 3.2 Wt.% (LiA-1-cg sample). From a macroscopic point of view, the polymer materials appeared homogeneous in terms of dispersion of the zeolite into the polymer matrix. Scanning Electron Microscopy (SEM) was performed on each sample to analyze sample homogeneity from a microscopic point of view. SEM and EDX analysis showed the homogeneous repartition of the zeolitic particles into the polymer matrix. In addition, tensil tests were performed in order to evaluate the mechanical properties of the different samples. The results are summarized in Table 9.

**Table 9: Young modulus of the activated and water saturated molded parts composite material (NaA-0-cmp, LiA-1-cmp and MgA-1-cmp samples.**

| | **Young modulus (N) Activated¹** |
|---|---|
| **NaA-0-cmp** | **2.57 ± 0.32** |
| **LiA-1-cmp** | **2.52 ± 0.37** |
| **MgA-1-cmp** | **2.62 ± 0.29** |

| | |
|---|---|
| ¹Composite material manufactured with activated zeolite powder and directly placed in sealed aluminum bags for protection against atmosphere pollutants. | |

According to Table 9, the Young modulus of the activated molded part composite forms containing NaA-0, LiA-1 and MgA-1 zeolite samples were similar across all the samples which indicated that there was no significant effect of the nature of compensating cations on the mechanical properties of the composite materials.

### (3) Water adsorption on composite materials:

Prior to testing the adsorption properties of the entrained polymer composite material samples of the invention, the associated zeolite powder samples were analyzed in the same conditions as the reference materials. The adsorption kinetic curves of the zeolites and their corresponding composites are displayed in Figures 6A, 6B and 6C. The adsorption capacities are compiled in Table 10. Figures 6(A-C) illustrates the water adsorption kinetics of (A) the LTA-type zeolite (NaA-0), (LiA-1) and (MgA-1) and their associated composites forms, respectively; (B) NaA-0-cg, LiA-1-cg and MgA-1-cg samples; and (C) NaA-0-cmp, LiA-1-cmp and MgA-1-cmp samples. As expected from the water adsorption isotherms of zeolite materials displayed in Figure 6(A-C), all samples showed water adsorption with similar behavior. The plateau of saturation was reached after approximately 3 hours for all samples while MgA-1 still showed slight water uptake (+1 wt%) after 3h until reaching the final water uptake.

**Table 10: Water adsorption capacity of the different zeolite samples and their associated composite forms.**

| | **Water adsorption capacity (Wt.%)** | | | |
|---|---|---|---|---|
| **Sample** | **Powder¹** | **Powder^{2,3}** | **A-101 Granulate^{2,3,4}** | **A-101 Molded part^{2,3,4}** |
| | | | | |
| **NaA-0** | **21.8 (± 0.7)⁵** | **23.5 (± 0.2)⁵** | **24.0 (± 0.4)⁵** | **23.3 (± 0.3)⁵** |
| **LiA-1** | **22.7 (± 0.9)⁵** | **22.5 (± 1.0)⁵** | **23.8 (± 0.1)⁵** | **23.4 (± 0.1)⁵** |
| **MgA-1** | **28.8 (± 0.04)⁵** | **28.6 (± 0.2)⁵** | **30.4 (± 1.0)⁵** | **27.5 (± 0.1)⁵** |

| | | | | |
|---|---|---|---|---|
| ¹ Results from Table 6. Measurements performed using the ASAP2020 equipment (Isotherms of adsorption). ² Measurements performed in the humidity chamber (80% RH - 30°C). Degassing step based on Table 1. ³ Average of 3 measurements. ⁴ The adsorption capacities are calculated for 100% activated zeolite taking into account the zeolite loading shown in Table 8. ⁵ Standard deviation | | | | |

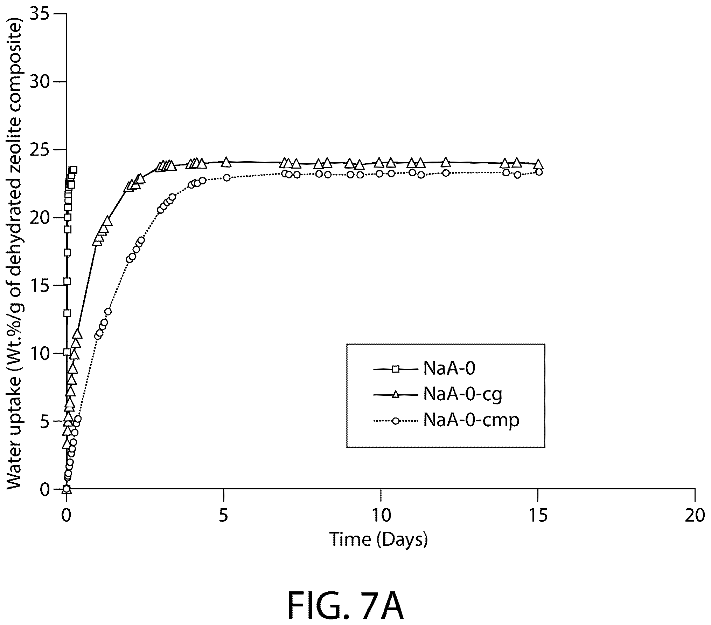

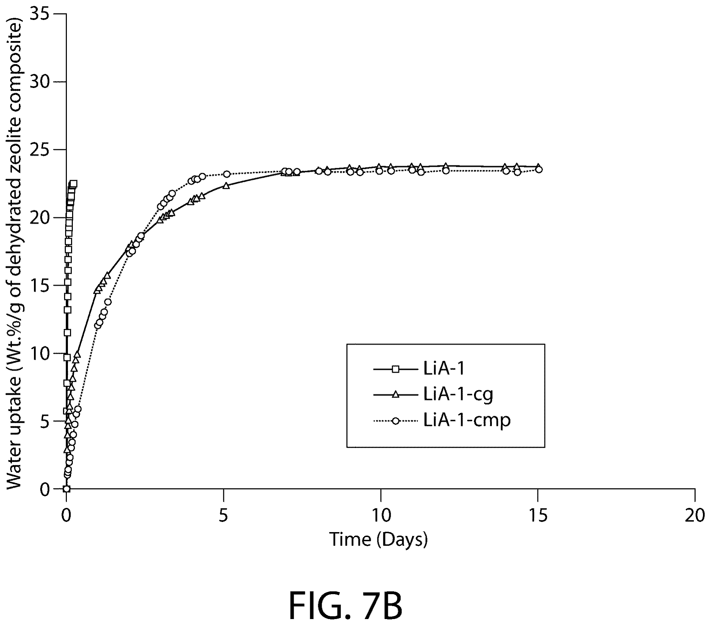

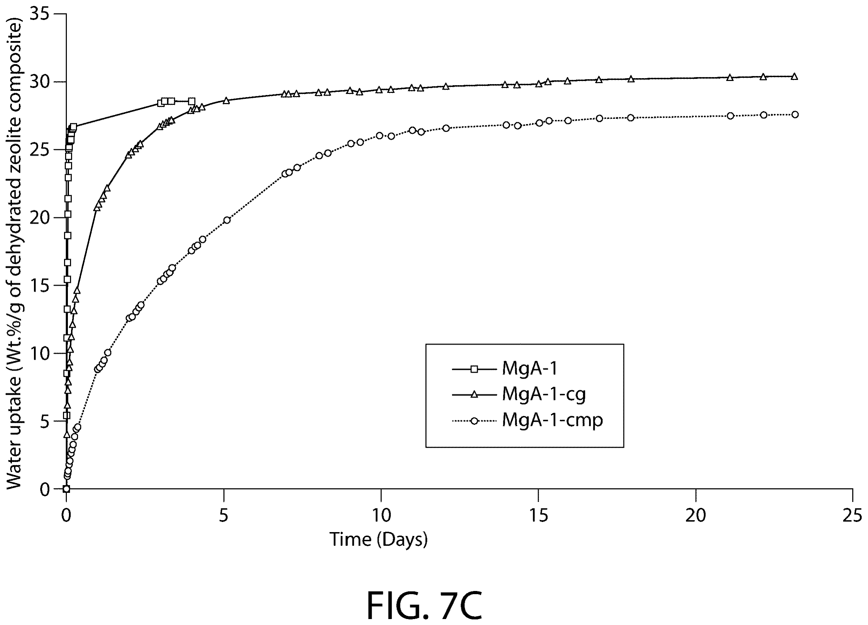

Figure 7(A-C) demonstrate the water adsorption kinetics of the entrained polymer compositions of the invention wherein the crude zeolite was treated and exchanged showing: (A) NaA-0, NaA-0-cg and NaA-0-cmp; (B) LiA-1, LiA-1-cg and LiA-1-cmp and (C) MgA-1, MgA-1-cg and MgA-1-cmp samples. As discussed above, the cationic exchange enhanced the water adsorption capacity of the zeolites when integrated into the polymer composites preserving the water absorption capacity after entraining the exchanged zeolites into the polymeric compositions when prepared according to the method of the invention.

According to Table 10 and Figures 7(A-C), all the composite materials according to the invention showed a water adsorption capacity equivalent to the parent zeolite, meaning that the adsorption capacities of the zeolite was not affected by the incorporation of zeolite in the matrix of the base polymer when the entrained polymer composition was prepared by the method according to the invention. SEM imaging and the similarity of the adsorption capacities between the zeolite powders and the corresponding composite materials suggests that water is most likely adsorbed into the zeolite crystals.

In general, the studies showed that the NaA-0 and LiA-1 powders and their corresponding entrained polymer compositions containing NaA-0 and LiA-1 zeolites showed similar water adsorption capacities while the MgA-1 samples in both zeolite powder and in its corresponding entrained polymer composite forms showed a significant increase of the water adsorption capacity in comparison with the sodium form.

Figures 6(A-C) and Figures 7(A-C) also demonstrate that each sample has its own kinetic of adsorption. The powder forms present in all cases the faster adsorption kinetic in comparison to its associated composite samples.

Furthermore, Table Fig. 7(A-C) and Table 10 also demonstrate that the molded part samples presented a slightly lower kinetic of adsorption than the polymer composites in granulate form (this factor was less pronounced for the LiA-1 sample). This observation may have resulted from the shaping of the samples and the test method applied. It is thought that this may also be attributed to the fact that a greater surface are is exposed to atmospheric humidity in the polymer granule samples in comparison to the polymer molded part samples, where only one side of each of the samples was exposed to atmospheric humidity. In addition, the granulate samples were shaken between each measurements which may have allowed an overall adsorption on granulate surfaces compared to the molded part samples.

X-ray Fluorescence (XRF), Inductive Coupled Plasma Optical Emission Spectroscopy (ICP-OES) and Energy Dispersive X-Ray Spectroscopy (EDX) reported that a significant amount of the introduced cations is homogeneously distributed into the zeolite framework, sign of a successful cationic exchange. Scanning electron microscopy photographs highlight the cubic morphology of LTA crystals while XRD and NMR analysis confirmed that the exchanged zeolite does not suffer from significant structural changes.

The replacement of sodium cations by a smaller monovalent cation such as lithium or a smaller bivalent cation such as magnesium leads to the increase of the available microporous volume which in addition of less congested pore opening, increase the accessibility (N2 in LTA) to the micropores leading to an improved storage of host molecules, as for example water. In addition, bivalent cations lead to higher degree of ordered water molecules around them, a better spatial organization contributes also to improve water adsorption. According to water adsorption isotherms results, an increase of the water adsorption capacities of 4% and 32% are observed for lithium and magnesium exchanged samples, respectively in comparison to the parent material indicating that magnesium offers the best performances.

In a second part of experimentation, these exchanged zeolites were mixed with polymers to manufacture composite materials in granulate and molded part forms using extrusion and injection processes, respectively. The determination of the zeolite loading in the respective composite formulations showed consistent results with the introduced amount of components into formulations which points toward homogeneous and viable shaping processes. This is confirmed through SEM analysis which showed an homogeneous distribution of zeolite crystals into the polymers matrix for both granulates and molded part forms accompanied with preferential orientation of polymer fibers and zeolite crystals. Water adsorption was observed for each composite, whatever the shaping and the nature of the charge compensating cations contained in the zeolite. For composite materials, granulates containing the exchanged zeolite showed similar results regarding water adsorption in comparison with the parent sample. The water adsorption for the molded part forms is also similar for the exchanged zeolites in comparison with the parent material.

This work confirmed that developed composite materials with zeolites as fillers preserved the adsorption properties of zeolite crystals. These exchanged zeolites, especially with Mg2+ as charge compensating cations, are promising for uses in water decontamination applications because of either an increased protection against water or a smaller amount of adsorbent required to trap the same amount of water compared to their sodium counterparts.

Further embodiments:
1. A process for making a polymer composition for enhanced sorption, the process comprising the steps of:
   (a) providing a crude aluminosilicate zeolite;
   (b) treating the crude zeolite with a solution comprising mono, di or trivalent cations to form a treated cation exchanged zeolite;
   (c) optionally, repeating step (b) one or more times;
   (d) drying the treated cation exchanged zeolite to provide a dried cation exchanged zeolite, wherein the dried cation exchanged zeolite has a water adsorption capacity that is greater than the water adsorption capacity of the crude zeolite before cation exchange treatment;
   (e) optionally, repeating step (b) and step (c) one or more times;
   (f) adding and blending the dried cation exchanged zeolite with a base polymer; and
   (g) forming a polymer compositon having a water adsorption capacity per gram of zeolite that is greater than the crude zeolite.
2. The process of item 1, wherein the zeolite is an aluminosilicate or silicoaluminophosphate containing compensating cations, and is selected from the group comprising sodium, magnesium, lithium, potassium, calcium, zinc, manganese and iron,
3. The process of item 2, wherein the crude zeolite is an LTA-type or FAU-type zeolite.
4. The process of item 3 wherein the crude zeolite is sodium zeolite and is treated with a solution comprising Mg^{2+,} Li⁺, K⁺, Ca²⁺, Zn²⁺, Mn²⁺ and Fe³⁺ cations or a combination thereof.
5. The process of item 4, wherein the zeolite solution comprises MgCl2 or LiCl.
6. The process of item 5, wherein the crude zeolite and the MgCl₂ or LiCl solution are in a ratio from 0.5 g/20 mL to 2 g/20 mL.
7. The process of any of the previous items wherein the dried cation exchanged zeolite is added to the base polymer in powder form.
8. The process of any of the previous items wherein the crude zeolite is sodium zeolite, the solution for cation exchange comprises Mg²⁺ cations and Li⁺ cations or a combination thereof, and the water adsorption capacity of the polymer composition is from at least 1 % to 33 % greater than the water adsorption capacity of the crude sodium zeolite.
9. The process of any of the previous items, wherein the zeolite polymer composition is used for the sorption of at least one of water, ammonia, nitrogen, or oxygen or combination thereof.
10. The process of any of the previous items, wherein the concentration of zeolite within the polymer composition is in the range of 1 % to 74 % by weight with respect to the total weight of the polymer composition.
11. The process of any of the previous items, wherein the distribution of zeolite within the base polymer of the polymer composition is essentially homogeneous as observed by Scanning Electron Microscopy (SEM).
12. The process of any of the previous items, wherein the base polymer is selected from polypropylene, polyethylene, polyhydroxyalkanoate (PHA), polylactique acid (PLA), polybutylene succinate (PBS), polyisoprene, polyhexene, polybutadiene, polybutene, polysiloxane, polycarbonate, polyamide, ethylene-vinyl acetate copolymer, ethylene-methacrylate copolymer, polyvinyl chloride (PVC), polystyrene, polyester, polyanhydride, polyacrylianitrile, polysulfone, polyacrylic ester, acrylic, polyurethane, polyacetal, polyvinylpyrrolidone (PVP), a copolymer, or a combination thereof.
13. The process of any of the previous items, further comprising adding a channeling agent to the base polymer, and wherein the zeolite is entrained in the polymer composition.
14. The process of item 13, wherein the amount of the channeling agent is in a range from 1% to 25%, optionally from 2% to 15%, optionally from 5% to 20%, optionally from 8% to 15%, optionally from 10% to 20%, optionally from 10% to 15%, or optionally from 10% to 12% by weight with respect to the total weight of the polymer composition.
15. The process of item 13, wherein the channeling agent is selected from polyethylene glycol (PEG), ethylene-vinyl alcohol (EVOH), polyvinyl alcohol (PVOH), glycerin polyamine, polyurethane, polycarboxylic acid, propylene oxide polymerisate-monobutyl ether, propylene oxide polymerisate, ethylene vinyl acetate, nylon 6, nylon 66, or a combination thereof.
16. The process of item 13, wherein the polymer composition is a monolithic material and is at least two-phase or at least three-phase.
17. The process of any of the previous items, wherein the polymer composition is formed by extrusion molding, injection molding, blow molding, thermoforming, continuous compounding, vacuum molding or hot melt dispensing.
18. The process of item 17, wherein the polymer composition is formed into a granule, a pellet, a film, a sheet, a disk, a cover, a plug, a cap, a lid, an insert, a stopper, a gasket, a seal, a washer, a liner, a ring, a container or a package.
19. The process of any of the previous items, further comprising adding the polymer composition to a packaging material selected from plastic, paper, glass, metal, synthetic resin, ceramic or a combination thereof.
20. A polymer composition prepared by the method of any of the previous items.
21. The polymer composition of item 20 for use as a dessicant.
22. The polymer composition of item 21 for use in dehumidifiers or in adsorption heat pumps.
23. A packaging material comprising the polymer composition of any of items 20 to 22.
24. The packaging material of item 23, wherein the material is selected from plastic, paper, glass, metal, ceramic, synthetic resin or a combination thereof.
25. A polymer composition for enhanced sorption, the polymer composition comprising:
   (a) a mono, di or trivalent cation exchanged aluminosilicate zeolite; and
   (b) a base polymer;
   wherein the polymer compositon has a water adsorption capacity per gram of zeolite that is greater than a reference crude sodium zeolite.
26. The polymer composition of item 25, wherein the zeolite is an aluminosilicate or a silicoaluminophosphate containing compensating cations selected from the group comprising sodium, magnesium, lithium, potassium, calcium, zinc, manganese and iron.
27. The polymer composition of item 25 or item 26, wherein the zeolite is an LTA-type or FAU-type zeolite.
28. The polymer composition of any of items 25 to 27 wherein the zeolite comprises magnesium, lithium or both and the water adsorption capacity of the polymer composition is from at least 1 % to 33 % greater than the water adsorption capacity of the reference crude sodium zeolite.
29. The polymer composition of any of items 25 to 28, wherein polymer composition is used for the sorption of at least one compound selected from water, ammonia, nitrogen and oxygen or combinations thereof.
30. The polymer composition of any of items 25 to 29 wherein the concentration of zeolite within the polymer composition is in the range of 1 % to 74 % by weight with respect to the total weight of the polymer composition.
31. The polymer composition of any of items 25 to 30, wherein the distribution of zeolite within the base polymer of the polymer composition is essentially homogeneous as observed by Scanning Electron Microscopy (SEM).
32. The polymer composition of any of items 25 to 31, wherein the base polymer is selected from polypropylene, polyethylene, polyhydroxyalkanoates (PHA), polylactique acid (PLA), polybutylene succinate (PBS), polyisoprene, polyhexene, polybutadiene, polybutene, polysiloxane, polycarbonate, polyamide, ethylene-vinyl acetate copolymer, ethylene-methacrylate copolymer, polyvinyl chloride (PVC), polystyrene, polyester, polyanhydride, polyacrylianitrile, polysulfone, polyacrylic ester, acrylic, polyurethane, polyacetal, polyvinylpyrrolidone (PVP), a copolymer, or a combination thereof.
33. The polymer composition of any of items 25 to 32 further comprising a channeling agent, and wherein the zeolite is entrained in the polymer composition.
34. The polymer composition of item 33, wherein the amount of the channeling agent is in a range from 1% to 25%, optionally from 2% to 15%, optionally from 5% to 20%, optionally from 8% to 15%, optionally from 10% to 20%, optionally from 10% to 15%, or optionally from 10% to 12% by weight with respect to the total weight of the polymer composition.
35. The polymer composition of item 33 or item 34, wherein the channeling agent is selected from polyethylene glycol (PEG), ethylene-vinyl alcohol (EVOH), polyvinyl alcohol (PVOH), glycerin polyamine, polyurethane, polycarboxylic acid, propylene oxide polymerisate-monobutyl ether, propylene oxide polymerisate, ethylene vinyl acetate, nylon 6, nylon 66, or a combination thereof.
36. The polymer composition of any of items 25 to 35, wherein the polymer composition is a monolithic material and is at least two-phase or at least three-phase.
37. The polymer composition of any of items 25 to 36, wherein the polymer composition is formed by extrusion molding, injection molding, blow molding, thermoforming, continuous compounding, vacuum molding or hot melt dispensing.
38. The polymer composition of items 25 to 37, wherein the polymer composition is formed into a powder, a granule, a bead, a pellet, a film, a sheet, a disk, a cover, a plug, a cap, a lid, an insert, a stopper, a gasket, a seal, a washer, a liner, a ring, a container or a package.
39. The polymer composition of any of items 25 to 38 provided in the form of a sachet, a packet, or a gel pack.
40. A packaging material comprising the polymer composition of any of items 25 to 39 selected from plastic, paper, glass, metal, ceramic, synthetic resin or a combination thereof.

## Claims

1. A process for making a polymer composition for enhanced sorption, the process comprising the steps of:
(a) providing a crude sodium zeolite which is a crude sodium aluminosilicate or crude sodium silicoaluminophosphate zeolite;
(b) treating the crude sodium zeolite with a solution comprising Mg²⁺, Li⁺, K⁺, Ca⁺, Zn²⁺, Mn²⁺, or Fe³⁺ cations, or a combination thereof, to form a treated cation exchanged sodium zeolite;
(c) optionally, repeating step (b) one or more times;
(d) drying the treated cation exchanged sodium zeolite to provide a dried cation exchanged sodium zeolite, having an absorption or adsorption capacity for one or more of ammonia, nitrogen, oxygen or water that is greater than the absorption or adsorption capacity of the crude sodium zeolite before cation exchange treatment;
(e) optionally, repeating step (b) and step (c) one or more times;
(f) adding and blending the dried cation exchanged sodium zeolite with a base polymer; and
(g) forming the polymer composition.

2. The process of claim 1, wherein the crude sodium zeolite is an LTA-type or FAU-type.

3. The process of claim 1 or 2, wherein the solution for cation exchange comprises Mg²⁺ cations, Li⁺ cations, or a combination thereof, and the adsorption capacity of the dried cation exchanged sodium zeolite for water is from at least 1% to 33% greater than the water adsorption capacity of the crude sodium zeolite before cation exchange treatment.

4. The process of any of claims 1 to 3, wherein the solution comprises MgCl2 or LiCl.

5. The process of any of the previous claims, wherein the dried cation exchanged sodium zeolite is added to the base polymer in powder form.

6. The process of any of the previous claims, wherein the concentration of the dried cation exchanged sodium zeolite within the polymer composition is in the range of 30 % to 60 % by weight with respect to the total weight of the polymer composition.

7. The process of any of the previous claims, wherein the base polymer is selected from polypropylene, polyethylene, polyhydroxyalkanoate (PHA), polylactic acid (PLA), polybutylene succinate (PBS), polyisoprene, polyhexene, polybutadiene, polybutene, polysiloxane, polycarbonate, polyamide, ethylene-vinyl acetate copolymer, ethylene-methacrylate copolymer, polyvinyl chloride (PVC), polystyrene, polyester, polyanhydride, polyacrylnitrile, polysulfone, polyacrylic ester, acrylic, polyurethane, polyacetal, polyvinylpyrrolidone (PVP), a copolymer, or a combination thereof.

8. The process of any of the previous claims, further comprising adding a channeling agent to the base polymer and mixing the channeling agent with the base polymer, thus forming an entrained polymer with channels, wherein the dried cation exchanged sodium zeolite is entrained in the entrained polymer, the channeling agent being a material that is immiscible with the base polymer and able to transport a gas phase substance at a faster rate than the base polymer.

9. The process of claim 8, wherein the amount of the channeling agent is in a range from 2% to 15% by weight with respect to the total weight of the polymer composition.

10. The process of claim 8 or 9, wherein the channeling agent is selected from polyethylene glycol (PEG), ethylene-vinyl alcohol (EVOH), polyvinyl alcohol (PVOH), glycerin polyamine, polyurethane, polycarboxylic acid, propylene oxide polymerisate-monobutyl ether, propylene oxide polymerisate, ethylene vinyl acetate, nylon 6, nylon 66, or a combination thereof.

11. A polymer composition for enhanced sorption, the polymer composition comprising:
(a) a cation exchanged sodium zeolite which is a cation exchanged sodium aluminosilicate or sodium silicoaluminophosphate zeolite, comprising one or more cations selected from Mg²⁺, Li⁺, K⁺, Ca⁺, Zn²⁺, Mn²⁺, or Fe³⁺; and
(b) a base polymer,
wherein the cation exchanged sodium aluminosilicate or sodium silicoaluminophosphate zeolite has an absorption or adsorption capacity for one or more of ammonia, nitrogen, oxygen or water that is greater than the absorption or adsorption capacity absent of a cation exchange treatment.

12. The polymer composition of claim 11, wherein the cation exchanged sodium zeolite comprises magnesium, lithium or both and wherein the adsorption capacity of the cation exchanged sodium zeolite for water is from at least 1% to 33% greater than the adsorption capacity of the sodium zeolite before cation exchange treatment.

13. The polymer composition of claim 11 or claim 12, wherein the polymer composition is in the form of a powder, a granule, a bead, a pellet, a film, a sheet, a disk, a cover, a plug, a cap, a lid, an insert, a stopper, a gasket, a seal, a washer, a liner, a ring, a container or a package.

14. The polymer composition of any of claims 11 to 13, prepared by the process of any of the claims 1 to 10.

15. Use of the polymer composition of any of claims 11 to 14 as a dessicant, preferably in a dehumidifier or in an adsorption heat pump.

16. Use of the polymer composition of any of claims 11 to 14 to remove, reduce, scavenge, control or modify the amount of water in an environment.

17. A packaging material comprising the polymer composition of any of claims 11 to 14, wherein the material is selected from plastic, paper, glass, metal, ceramic, synthetic resin or a combination thereof.
